Europäisches Patentamt

European Patent Office

Office européen des brevets

(19)

(11) Veröffentlichungsnummer : **0 115 275 B1**

# (12) EUROPÄISCHE PATENTSCHRIFT

(45) Veröffentlichungstag der Patentschrift :
19.08.87

(21) Anmeldenummer : 84100142.3

(22) Anmeldetag : 09.01.84

(51) Int. Cl.⁴ : **G 11 B 15/60**

(54) Laufwerk für einen Videorecorder.

(30) Priorität : **07.01.83 DE 3300303**
**07.01.83 DE 3300378**

(43) Veröffentlichungstag der Anmeldung :
**08.08.84 Patentblatt 84/32**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
DE-A- 1 462 120
DE-A- 2 519 700
DE-C-   927 999
FR-A- 2 281 607
FR-A- 2 342 538
FR-A- 2 373 853
US-A- 2 919 314
US-A- 3 614 831
US-A- 3 697 676
US-A- 3 943 566
US-A- 3 996 619
IBM TECHNICAL DISCLOSURE BULLETIN, Band 17, Nr. 4, September 1974, Seite 1188, New York, US R.C. DURBECK u.a.: "Tape control device"

(73) Patentinhaber : **Deutsche Thomson-Brandt GmbH Hermann-Schwer-Strasse 3 Postfach 2060 D-7730 Villingen-Schwenningen (DE)**

(72) Erfinder : **Schandl, Hartmut Egerstrasse 2 D-7732 Villingen-Schwenningen (DE)**

## Beschreibung

Bekannte Video- Magnetbandgeräte nach dem Schrägspurverfahren benutzen zur Führung des Magnetbandes im Bereich der Kopftrommel ein ortsfestes, in Form einer schraubenlinienförmigen Stufe ausgebildetes Führungsteil, auch Lineal genannt. Das Magnetband stützt sich mit seiner unteren Kante auf der Stufe des Lineals ab und wird durch die Steigung des Lineals in einem fest vorgegebenen Schraubungswinkel um die Kopftrommel geführt. Die durch einen Magnetkopf oder mehrere Magnetköpfe aufgezeichneten Schrägspuren werden durch diese Anordnung exakt parallel zueinander ausgerichtet. Eine gewünschte Änderung des Schraubungswinkels für die störungsfreie Wiedergabe bei Sonderfunktionen wie z. B. Suchlauf in beiden Richtungen mit erhöhter Bandgeschwindigkeit ist jedoch nicht möglich.

Es ist bekannt, bei Sonderfunktionen den oder die Magnetköpfe in ihrer Höhenlage relativ zum Magnetband in Abhängigkeit von Steuersignalen, welche bei der Aufnahme auf das Magnetband aufgesprochen werden, zu steuern, wie in « Grundig, Technische Informationen » 3-1980, Nr. 3, Seiten 111-130 beschrieben. Die Höhenverstellung geschieht mittels einseitig an der Kopftrommel eingespannter Piezo-Keramikplättchen, auf deren frei schwingender Zunge die Videoköpfe befestigt sind. Durch Anlegen einer Steuerspannung werden die Piezo-Keramikplättchen mechanisch so ausgelenkt, daß die Magnetköpfe aufgesprochenen Schrägspuren folgen können.

Das vorstehende genannte, zur Standardausrüstung moderner Videorecorder gehörende Lineal an der Kopftrommel ist fertigungstechnisch nur kostenaufwendig mittels spezieller Maschinen herstellbar. Diese Bandführung erlaubt keine Sonderfunktionen, da der Schraubungswinkel festliegt und nicht verändert werden kann. Für die störungsfreie Wiedergabe von Sonderfunktionen sind jedoch zusätzliche aufwendige Konstruktionen für die Nachführung der Videoköpfe erforderlich.

Es sind auch rotierende (einteilige) Kopftrommelanordnungen bekannt (US-PS 2.919.314), bei denen die Positionierung des Magnetbandes im Bereich der Kopftrommelumschlingung durch von Servomotoren gesteuerte Führungselemente erfolgt, die an Ein- und Auslauf des Magnetbandes nahe der Kopftrommel angebracht sind. Die Information für die Steuerung der Servomotoren erfolgt durch elektronische Auswertung von optischen Signalen, welche die Lage des Magnetbandes im Kopftrommelbereich abtasten.

Aus der DE-OS 14 62 120 ist ferner ein Bandlaufsystem bekannt, bei dem sich das Band nicht auf einem Lineal, sondern auf mehrere getrennte Führungsteile im Bereich der Kopftrommel mit nur einer Kante abstützt. Diese Führungsteile ragen zum Teil in eine umlaufende Nut der Kopftrommel. Für eine Verstellung der Lage des Bandes relativ zur Kopftrommel sind Führungsteile vorgesehen, die als Federn ausgebildet sind und mit der sich drehenden Kopftrommel in Kontakt stehen.

Es ist Aufgabe der Erfindung, einen Videorecorder zu entwickeln, welcher die Spurgenauigkeit der Köpfe ohne Steuerung der Kopflage ermöglicht. Diese Aufgabe wird durch die im Anspruch 1 angegebene Erfindung gelöst. Weiterbildungen der Erfindung sind in den Unteransprüchen beschrieben.

Die Erfindung besteht im Prinzip darin, daß das Magnetband im Bereich der Kopftrommelumschlingung an drei Punkten geführt wird. Einer dieser Punkte ist ein ortsfestes Führungsteil, auf welchem sich die untere Kante des Magnetbandes aufstützt. Dieses Führungsteil ist näherungsweise mittig zum Umschlingungsumfang angeordnet. Ein- und Auslauf des Magnetbandes an der Kopftrommel werden an der anderen Kante des Magnetbandes durch ortsfeste Elemente geführt. Durch gegensinnige Höhenverstellung dieser Elemente gegenüber der feststehenden mittleren Unterstützung wird eine Verlagerung der Dreipunktführung bewirkt, die es ermöglicht, den Spurwinkel zu verändern.

Nachstehend soll anhand der Figuren 1-5 die Erfindung erläutert werden :

Figur 1 zeigt den Verlauf der Bandführung ein einem erfindungsgemäßen Laufwerk,

Figur 2 zeigt in einer vereinfachten Seitendarstellung die Dreipunktführung des Magnetbandes an einer einteiligen Kopftrommel,

Figur 3 zeigt einen Ausschnitt einer einteiligen Kopftrommel mit Nut, in welcher ein ortsfestes Führungsteil eingreift,

Figur 4 zeigt den Ausschnitt eines Laufwerkes mit der Schnittlinie A-B,

Figur 5 zeigt eine teilweise Darstellung in Seitenansicht eines Schnittes A-B wie in Fig. 4 angedeutet,

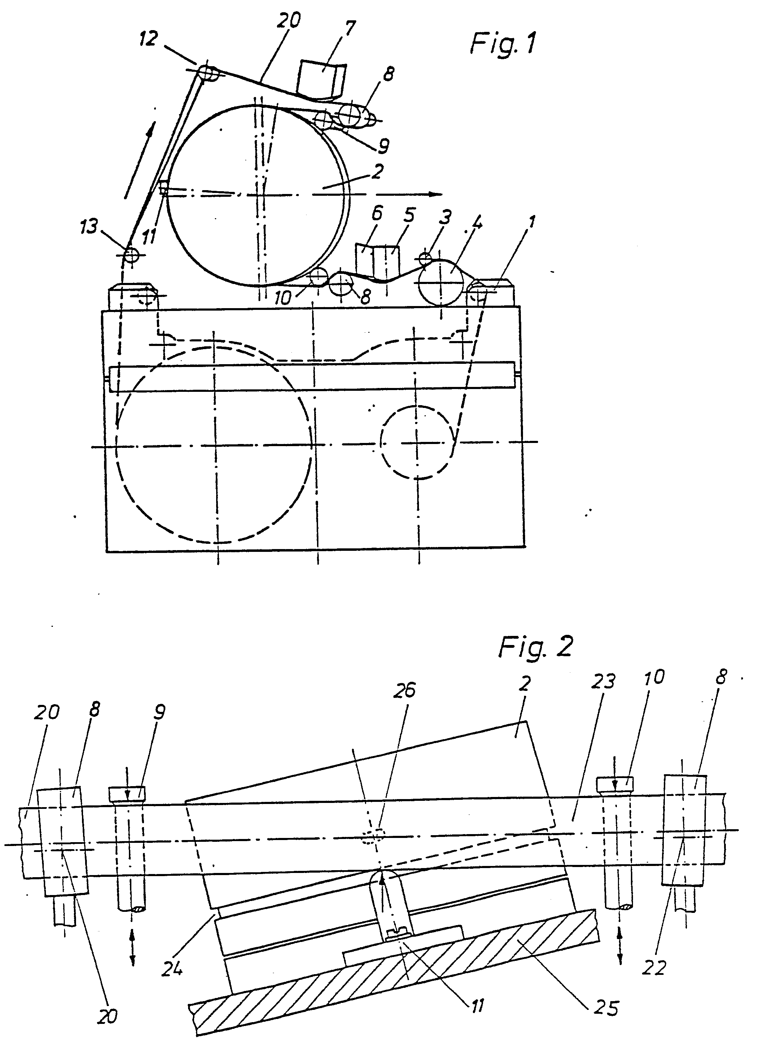

In Fig. 1 ist ein Laufwerk mit eingelegter Videokassette 1 dargestellt. Eine Gummiandruckrolle 4, die Umlenkstifte 8, eine Umlenkrolle 12 und Bandzugfühler 13 haben das Magnetband 20 aus der Videokassette 1 herausgezogen und über die Führungsstifte 9 und 10 und die Kopftrommel 2 so angelegt, daß das Magnetband 20 die Kopftrommel 2 schraubenförmig bei etwa mittiger Unterstützung durch ein ortsfestes Führungsteil 11 umschlingt. Das Magnetband 20 wird durch die Gummiandruckrolle 4 an die Kapstanwelle 3 gedrückt und läuft an einem Audiokopf 5, einem Audiolöschkopf 6 und einem Gesamtlöschkopf 7 vorbei. Das Magnetband 20 wird im Normalbetrieb von der linken Abwickelspule zur rechten Aufwickelspule der Videokassette 1 transportiert. Bandtransportrichtung und Drehrichtung der Kopftrommel 2 stimmen beim Normalbetrieb (Hinlauf) überein.

In Fig. 2 ist eine geneigt gelagerte einteilige Kopftrommel 2 dargestellt, die von dem Magnetband 20 schraubenlinienförmig umschlungen wird. Die Zuführung des Magnetbandes 20 erfolgt über je einen Umlenkstift 8 und die Bandführungsstifte 9 und 10. Das Magnetband 20 ist so geführt, daß es mit der einen Kante automatisch an den Flanschen der Führungsstifte 9 und 10 anliegt. Die andere Magnetbandkante liegt auf dem bei etwa halbem Umschlingungsumfang angeordneten ortsfesten Führungsteil 11 auf. Durch diese Anordnung wird eine Dreipunktlagerung für das Magnetband 20 im Bereich der Kopftrommelumschlingung ermöglicht. Bei der dargestellten einteiligen Kopftrommel 2 ragt das Führungsteil 11, auf dem sich die Magnetbandunterkante abstützt, in eine umlaufende Nut 24 hinein, ohne die Kopftrommel 2 zu berühren. Das Führungsteil 11 ist am Laufwerkchassis 25 befestigt und kann für Justierzwecke in seiner relativen Mittellage zum Umschlingungsumfang verstellt werden. Für den Hinlauf kann das Band so justiert werden, daß der Kopf 26 genau die gewünschten Spuren abtastet. Bei veränderten Bandgeschwindigkeiten ist dies aber nicht der Fall. Durch eine gegensinnige Höhenverstellung der Führungsstifte 9 und 10 kann der Schraubungswinkel im Bereich der Kopftrommelumschlingung nun derart geändert werden, daß je nach Stellung der Führungsstifte 9 und 10 durch den oder die Magnetköpfe 26 Magnetspuren mit anderem Spurwinkel geschrieben oder abgetastet werden können. Die Umlenkstifte 8 sind mit einer um einen Dreh- und Kipppunkt 22 knapp unterhalb der Magnetbandmittellinie 23 angeordneten zylindischen Hülse versehen. Durch den Bandzug werden diese zylindrischen Hülsen derart ausgerichtet, daß bei jeder Bandgeschwindigkeit die obere Bandkante sich automatisch an die Flansche der Führungs-stifte anlegt. Eine solche Anordnung ist in der parallelen Deutsche Patentanmeldung P 33 00 378.5-31 beschrieben.

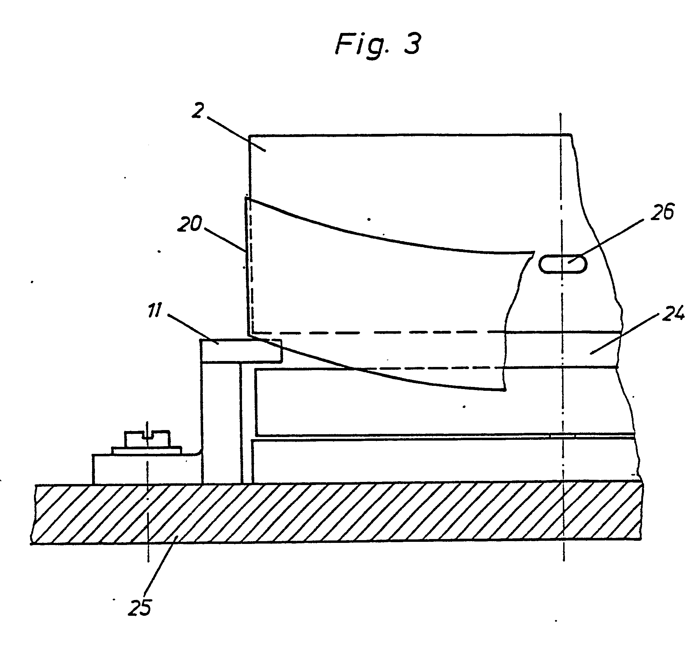

In Fig. 3 wird die Auflage des Magnetbandes 20 auf dem ortsfesten, etwa mittig zum Umschlkingungswinkel angeordneten Führungsteil 11 gezeigt. Das Führungsteil ragt in eine umlaufende Nut 24 der Drehtrommel 2, ohne diese zu berühren. Für Justierzwecke ist das ortsfeste Führungsteil 11 auf dem Chassis 25 einstellbar befestigt.

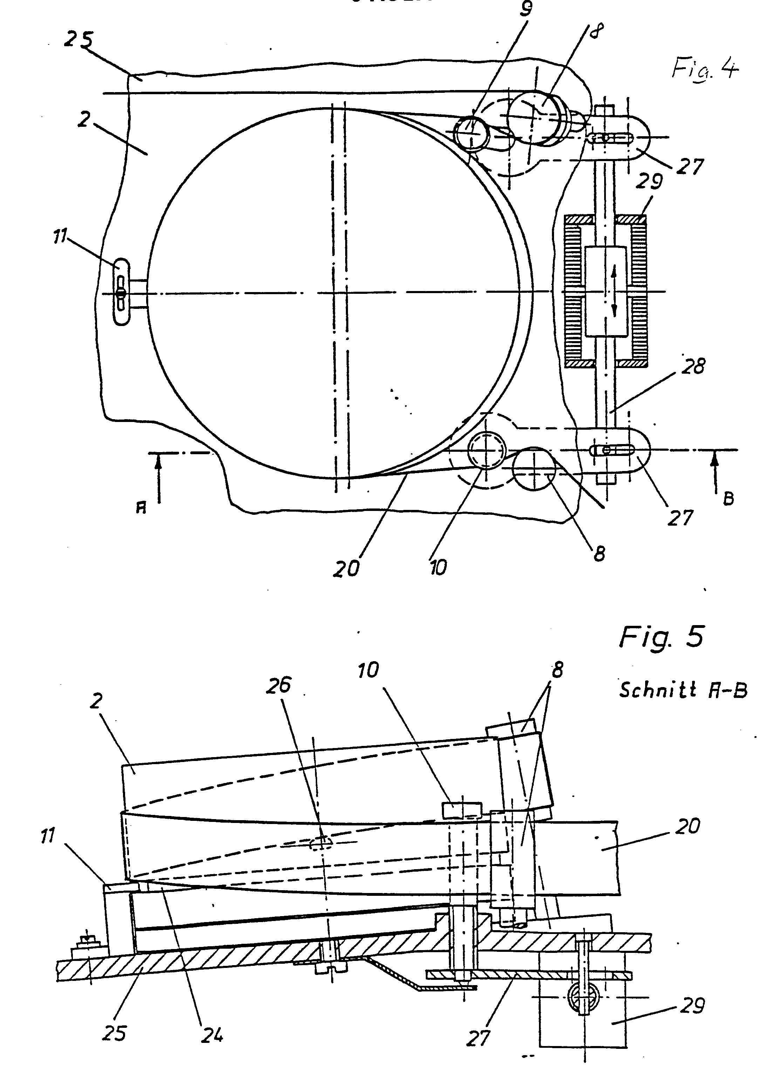

In Fig. 4 und 5 wird eine beispielhafte Vorrichtung für die Verstellung der Führungsstifte 9 und 10 gezeigt. Durch gegensinnige Höhenverstellung der Stifte wird eine Änderung des Schraubungswinkels des Magnetbandes 20 um die Kopftrommel 2 bewirkt. Die Führungsstifte 9 und 10 werden in gegenläufigen Gewindebuchsen geführt und sind mit Schwenkhebeln 27 verbunden, die über eine Schubstange 28 von einem elektrodynamischen Wandler 29 angetrieben werden. Der Wandler 29 wird von Signalen gesteuert, die im Wiedergabebetrieb ähnlich wie in « Grundig Technische Informationen » 3-1980 Nr. 3 beschrieben, aus vorher aufgezeichneten Kontrollsignalen gewonnen werden. Die Einstellung der Führungsstifte 9 und 10 kann aber auch durch die Betätigungsmittel für die Änderung der Bandgeschwindigkeit bewirkt werden, wobei vorjustierte Rastpositionen für korrekte Spurlage sorgen. Bei Bedarf kann eine zusätzliche kontinuierlich gesteuerte Nachjustierung verwendet werden.

Die Verstellwege der Stifte 9, 10 sind abhängig von der Geschwindigkeit, mit der sich das Magnetband 20 in Längsrichtung bewegt. Bei n-facher Geschwindigkeit muß der Verstellweg n Spurbreiten betragen, d. h. der eine Stift muß um n/2 Spurbreiten in die eine Richtung und der andere Stift um n/2 Spurbreiten in die andere Richtung verschoben werden. Dies gilt z. B. für Vor- und Rücklauf in gegensätzliche Richtungen.

## Patentansprüche

1. Laufwerk für einen Videorecorder mit einer rotierenden, die Videoköpfe tragenden und von einem Magnetband (20) schraubenlinienförmig umschlungenen Kopftrommel (2), mit einem am Umfang der Kopftrommel (2) etwa mittig zum Umschlingungswinkel angebrachten ortsfesten, das Magnetband (20) an seiner ersten Kante näherungsweise punktförmig abstützenden ersten Führungsteil (11) und in Laufrichtung des Magnetbandes ortsfesten zweiten und dritten Führungsteilen (9, 10) dadurch gekennzeichnet, daß die zweiten und dritten Führungsteile (9, 10) auf die zweite Kante des Magnetbandes (20) vor der Einlaufstelle und nach der Auslaufstelle des Magnetbandes (20) zur Kopftrommel (2) einwirken wobei die zweiten und dritten Führungsteile (9, 10) gegensinnig zueinander etwa quer zur Laufrichtung des Magnetbandes höhenverstellbar sind.

2. Laufwerk nach Anspruch 1, dadurch gekennzeichnet, daß das erste Führungsteil (11) an der Auflagestelle des Magnetbandes (20) verrundet ist.

3. Laufwerk nach Anspruch 1 oder 2, dadurch gekennzeichnet, daß das erste Führungsteil (11) an der Auflagestelle des Magnetbandes (20) eine besonders hohe Materialhärte aufweist.

4. Laufwerk nach einem der Ansprüche 1-3, dadurch gekennzeichnet, daß das erste Führungsteil (11) in Umfangrichtung der Kopftrommel (2) verstellbar ist.

5. Laufwerk nach einem der Ansprüche 1-4, dadurch gekennzeichnet, daß das zweite und dritte Führungsteil (9, 10) als parallel zur Bandfläche und im wesentlichen senkrecht zur Bandlaufrichtung angeordnete Führungsstifte ausgebildet sind, die jeweils am oberen Ende einen Flansch aufweisen, dessen Unterseite die Abstützung für die zweite Kante des Magnetbandes (20) bildet.

6. Laufwerk nach Anspruch 1, dadurch gekennzeichnet, daß die gegensinnige Verstellung der Führungsteile (9, 10) kontinuierlich steuerbar ist.

7. Laufwerk nach Anspruch 6, dadurch gekennzeichnet, daß die gegensinnige Höhenverstellung der Führungsteile (9, 10) in Abhängigkeit von Signalen erfolgt, die bei der Wiedergabe aus aufgezeichneten Pilotsignalen gewonnen werden.

8. Laufwerk nach Anspruch 1, dadurch gekennzeichnet, daß das erste Führungsteil (11) keinen Kontakt mit der Kopftrommel hat.

9. Laufwerk nach Anspruch 1, dadurch gekennzeichnet, daß die Höhenverstellung der der zweiten und dritten Führungsteile (9, 10) abhängig von der Bandgeschwindigkeit erfolgt.

**Claims**

1. A tape drive for a video recorder having a rotating head drum (2) which carries the video heads and round which a magnetic tape (20) is wrapped helically, having a first guide member (11) which is fitted at the circumference of the head drum (2) substantially in the middle of the angle of wrap and supports the magnetic tape (20) approximately punctiformly at its first edge and second and third guide members (9, 10) which are stationary in the direction of travel of the magnetic tape, characterised in that the second and third guide members (9, 10) act on the second edge of the magnetic tape (20) before the entry point and after the exit point of the magnetic tape (20) to and from the head drum (2), the second and third guide members (9, 10) being adjustable in height, in opposite directions to one another, substantially transversely to the direction of travel of the magnetic tape.

2. A tape drive as claimed in Claim 1, characterised in that the first guide member (11) is rounded at the point of support of the magnetic tape (20).

3. A tape drive as claimed in Claim 1 or 2, characterised in that the first guide member (11) has a particularly great hardness of material at the point of support of the magnetic tape (20).

4. A tape drive as claimed in any one of Claims 1-3, characterised in that the first guide member (11) is adjustable in the circumferential direction of the head drum (2).

5. A tape drive as claimed in any one of Claims 1-4, characterised in that the second and third guide members (9, 10) are constructed in the form of guide pins which are arranged parallel to the tape surface and substantially perpendicular to the direction of travel of the tape and each of which comprises, at the upper end, a flange, the under side of which forms the support for the second edge of the magnetic tape (20).

6. A tape drive as claimed in Claim 1, characterised in that the adjustment in height of the guide members (9, 10) in opposite directions is effected depending on signals which are obtained from recorded pilot signals during the reproduction.

7. A tape drive as claimed in Claim 6 characterised in that the adjustment in height of the guide members (9, 10) in opposite directions is effected depending on signals which are obtained from recorded pilot signals during the reproduction.

8. A tape drive as claimed in Claim 1, characterised in that the first guide member (11) has no contact with the head drum.

9. A tape drive as claimed in Claim 1, characterised in that the adjustment in height of the second and third guide members (9, 10) is effected depending on the tape speed.

**Revendications**

1. Entraîneur de bande pour un enregistreur vidéo comportant un tambour porte-têtes (2), qui porte des têtes vidéo et sur lequel une bande magnétique (20) s'enroule avec une forme hélicoïdale, un premier organe fixe de guidage (11) monté sur le pourtour du tambour porte-têtes (2) en étant approximativement situé au centre de l'angle d'enroulement et soutenant d'une manière approximativement ponctuelle la bande magnétique (20) au niveau d'un premier de ses bords, et des second et troisième organes de guidage montés fixes dans la direction de circulation de la bande magnétique, caractérisé en ce que les second et troisième organes de guidage (9, 10) agissent sur le second bord de la bande magnétique (20), en amont du point d'entrée et en aval du point de sortie de la bande magnétique (20) par rapport au tambour porte-tête (2), les deuxième et troisième organes de guidage (9, 10) pouvant être déplacés en hauteur en des sens réciproquement opposés, approximativement transversalement par rapport à la direction de circulation de la bande magnétique.

2. Entraîneur de bande selon la revendication 1 caractérisé en ce que le premier organe de guidage (11) est arrondi au niveau du point d'application de la bande magnétique (20).

3. Entraîneur de bande selon l'une des revendications 1 ou 2, caractérisé en ce que le matériau du premier organe de guidage (11) possède une dureté particulièrement élevée, au niveau du point d'application de la bande magnétique (20).

4. Entraîneur de bande selon l'une quelconque des revendications 1 à 3, caractérisé en ce que le premier organe de guidage (11) est réglable dans la direction circonférentielle du tambour porte-têtes (2).

5. Entraîneur de bande selon l'une quelconque des revendications 1 à 4, caractérisé en ce que les second et troisième organes de guidage (9, 10) sont reliés, sous la forme de broches de guidage qui s'étendent parallèlement à la surface de la bande et essentiellement perpendiculairement à la direction de circulation de la bande et qui possèdent respectivement, sur leur extrémité supérieure, une bride dont la face inférieure forme la zone de soutien pour le second bord de la bande magnétique (20).

6. Entraîneur de bande selon la revendication 1, caractérisé en ce que les déplacements, qui s'effectuent en des sens réciproquement opposés, des organes de guidage (9, 10) peuvent être commandés de façon continue.

7. Entraîneur de bande selon la revendication 6, caractérisé en ce que les réglages en hauteur, qui s'effectuent en des sens réciproquement opposés, des organes de guidage (9, 10) sont exécutés en fonction de signaux qui sont obtenus lors de la reproduction à partir de signaux pilotes enregistrés.

8. Entraîneur de bande selon la revendication 1, caractérisé en ce que le premier organe de guidage (11) n'établit aucun contact avec le tambour porte-têtes.

9. Entraîneur de bande selon la revendication 1, caractérisé en ce que le réglage en hauteur des second et troisième organes de guidage (9, 10) est réalisé en fonction de la vitesse de la bande.

Fig. 1

Fig. 2

## Fig. 3

**0 115 275**

Fig. 4

Fig. 5

Schnitt A-B

3